Europäisches Patentamt

European Patent Office

Office européen des brevets

(19)

(11) Veröffentlichungsnummer: **0 326 682**
**A2**

(12) **EUROPÄISCHE PATENTANMELDUNG**

(21) Anmeldenummer: 88120500.9

(22) Anmeldetag: 08.12.88

(51) Int. Cl.⁴: **B29C 45/16 , B29C 67/22**

(30) Priorität: 01.02.88 DE 3802875

(43) Veröffentlichungstag der Anmeldung:
09.08.89 Patentblatt 89/32

(84) Benannte Vertragsstaaten:
AT BE ES FR GB IT

(71) Anmelder: Klöckner Ferromatik Desma GmbH
Riegeler Strasse 4
D-7831 Malterdingen(DE)

(72) Erfinder: Wetzel, Walter
Bergstrasse 38
D-2807 Achim(DE)

(74) Vertreter: Kiefer, Winfried, Dipl.-Phys.
Klöckner-Werke Aktiengesellschaft
Patentabteilung Klöcknerstrasse 29
D-4100 Duisburg 1(DE)

(54) **Verfahren zum Abdichten des Restspaltes zwischen Bodenstempel und Läufer(n) einer Spritzgiessform für Mehrschichten-Schuhsohlen und Vorrichtung zur Durchführung des Verfahrens.**

(57) Die Erfindung betrifft ein Verfahren zum Abdichten des Restspaltes zwischen Bodenstempel und Läufer(n) einer Spritzgießform für Mehrschichten-Schuhsohlen und eine Vorrichtung zur Durchführung dieses Verfahrens, wobei zunächst eine Laufsohle mit vorgegebene(r/n) Aussparung(en) herzustellen ist. Die dafür verwendete Spritzgießform aus Bodenstempel 1 und Verdränger 8 besitzt im Verdränger 8 pro Aussparung einen verschiebbaren kolbenartigen Läufer 13 oder mindestens einen speziellen Stempelkopf eines mit mehreren derartigen Stempelköpfen versehenen Läufers 13 und auf der Bodenfläche 4 des Bodenstempels 1 für jede Aussparung einen umlaufenden Trennsteg 6 mit einer ihn in Richtung des Verdrängers 8 abschließenden Dichtkante 25.

Dabei trägt jeder Läufer 13 oder jeder Stempelkopf auf seiner dem Bodenstempel 1 gegenüberstehenden Dichtfläche 14 einen Dichtkörper 15 aus elastomerem Material, der während des gesamten Spritzgießvorganges den von Bodenfläche 4, korrespondierendem Trennsteg 6 und Dichtfläche 14 aufgespannten Raum derart ausfüllt, daß der Dichtkörper 15 in jedem Fall formschlüssig an der Innenseite der Dichtkante 25 anliegt.

## Verfahren zum Abdichten des Restspaltes zwischen Bodenstempel und Läufer(n) einer Spritzgießform für Mehrschichten-Schuhsohlen und Vorrichtung zur Durchführung des Verfahrens

Die Erfindung betrifft ein Verfahren zum Abdichten des Restspaltes zwischen Bodenstempel und Läufer(n) einer Spritzgießform für Mehrschichten-Schuhsohlen und eine Vorrichtung zur Durchführung des Verfahrens nach den Merkmalen des Oberbegriffes des Hauptanspruchs 1 und denjenigen des Oberbegriffes des Nebenanspruchs 6.

In der Schuhindustrie ist es Stand der Technik, an das auf einen Leisten aufgezogene Oberteil eines Stiefels oder Schuhs in speziellen Spritzgießmaschinen unmittelbar eine Sohle aus einer oder mehreren Gummi- oder Kunststoffschichten aufzubringen, wobei die erforderlichen Spritzgießmaschinen und die zugehörigen Spritzgießformen insbesondere darauf abgestimmt sein müssen, ob es sich um Sohlen aus einer oder mehreren Schichten und ob es sich um Schichten aus Gummi oder ungeschäumten Kunststoffen oder aus geschäumten Kunststoffen, beispielsweise Polyurethan, handeln soll. Vor allem im Bereich der Herstellung von Sport- sowie Arbeits- und Sicherheitsschuhen hat es sich als vorteilhaft erwiesen, Kunststoffsohlen aus mindestens zwei unterschiedlichen Schichten - nämlich einer festeren, abriebresistenten Laufsohle und einer zwischen dieser und dem Obermaterial angeordneten weicheren, elastischen Zwischensohle - aufzubauen und für beide Schichten schäumbares Polyurethan unterschiedlicher Zusammensetzung mit verschiedenen Zusätzen, beispielsweise Schaumbildnern und Farbstoffen, zu verwenden. Solche Sohlen gestatten darüber hinaus, ihre Eigenschaften den ganz speziellen Anforderungen, beispielsweise einer bestimmten Sportart, dadurch weitgehend anzupassen, daß in der - festeren - Laufsohle eine oder mehrere Aussparung(en) vorgesehen wird/werden, die beim Erzeugen der - elastischen - Zwischensohle von deren Material ausgefüllt wird/werden. Eine derartige Aussparung beispielsweise im Bereich des sogenannten Gelenkes zwischen Ballen- und Fersenbereich einer Laufschuhsohle erhöht deren Elastizität zum Nutzen des sportlichen Läufers ganz entscheidend.

Üblicherweise wird dabei zuerst mittels eines in einem zweiteiligen Formenrahmen eingefaßten Bodenstempels und eines ebenfalls im selben Formenrahmen eingefaßten Verdrängers, die beide innerhalb des Formenrahmens relativ gegeneinander beweglich sind, die Laufsohle gegossen. Anschließend wird der Verdränger gegen den das Schuhoberteil tragenden Leisten ausgetauscht und bei entsprechendem Abstand zwischen Leistenunterseite und Bodenstempel die Zwischensohle gegossen. Um vorher in der Laufsohle eine oder mehrere Aussparung(en) zu erhalten, genügt bei der Verwendung von Gummi oder unschäumbarem Kunststoff als Sohlenmaterial das Anbringen entsprechender Stempel mit vorgegebenen Abmessungen am Verdränger, die beim druckdichten Zusammenfahren von Bodenstempel und Verdränger vor dem Einspritzen des Sohlenmaterials paßgerecht gegen die die Lauffläche der Schuhsohle ausbildende Bodenfläche des Bodenstempels angelegt werden. Bei der Verwendung von schäumbarem Kunststoffmaterial, beispielsweise Polyurethan, für die Laufsohlenherstellung wird dagegen das Zusammenfahren von Bodenstempel und Verdränger bis auf eine geringfügige Restöffnung erst nach dem - nahezu drucklosen - Einlassen der flüssigen Kunststoffmischung in den Bodenstempel und dem Einsetzen des Aufschäumens vorgenommen, so daß hier eine oder mehrere Aussparung(en) in der Laufsohle nur erzielt werden kann/können, wenn für jede Aussparung ein am Verdränger verankerter und in diesem relativ zu ihm beweglicher kolbenartiger Läufer oder für mehrere Aussparungen ein einziger derartiger Läufer mit mehreren Stempelköpfen vorhanden ist, der in jedem während des Gießvorganges möglichen Abstand von Bodenstempel und Verdränger selbst oder mit seinen Stempelköpfen an der Bodenfläche des Bodenstempels anliegt.

Da in letztgenanntem Fall der Bodenstempel und der Verdränger niemals ganz aufeinandergefahren werden, ergab sich sehr bald die Erkenntnis, daß im fabrikmäßigen Betrieb der vorbeschriebenen - getaktet arbeitenden - Spritzgießmaschinen bereits geringfügige Abweichungen von der vorgegebenen Richtung der Relativbewegung zwischen Bodenstempel und Verdränger zu Verkantungen des/der Läufer gegenüber der Bodenfläche des Bodenstempels und damit zum Eindringen von Laufsohlenmaterial in die vorgesehenen Aussparungen führten, was andererseits ein qualitätsminderndes Aussehen der Schuhe oder ein zusätzliches Nacharbeiten nach sich zog. Dagegen wurde zunächst die Verwendung eines als Bestandteil des Bodenstempels auf seiner Bodenfläche umlaufenden, in Richtung auf den Verdränger mit einer Dichtkante abschließenden Trennsteges zur Definition jeder einzelnen Aussparung eingeführt, gegen den nunmehr die der Bodenfläche des Bodenstempels gegenüberstehende Dichtfläche des entsprechenden Läufers oder Stempelkopfes eines Läufers für Mehrfachaussparungen anstehen sollte, wobei jede dieser Dichtflächen so ausgebildet war, daß sie den entsprechenden Trennsteg allseitig nach außen überkragte. Bei dieser Konstruktion traten jedoch im industriellen Dauerbetrieb dieselben Schwierigkeiten wie bei dem zuvor beschriebenen Formentyp ohne Verwendung von Trennstegen auf, d.h. es traten Verkantungen der Dichtflächen gegenüber dem jeweiligen Trennsteg und damit der Durchtritt von Laufsohlenmaterial zwischen Dichtfläche eines Läufers und Dichtkante des zugehörigen Trennsteges in den die gewünschte Aussparung definierenden Hohlraum zwischen Bodenstempel, Trennsteg und Dichtfläche ein. Dies bewirkte wiederum ein qualitätsminderndes Aussehen der Schuhe und ein zusätzliches Nacharbeiten.

Als weitere Lösungsmöglichkeit wurde dann vorgeschlagen, die Dichtfläche(n) jedes Läufers mit einer Schicht eines elastomeren Materials zu versehen, insbesondere durch Aufkleben einer entsprechenden Platte, in die sich die Dichtkante jedes entsprechenden Trennsteges eindrücken kann. Dieses Verfahren verhindert zwar zuverlässig das Eindringen von Laufsohlenmaterial in die vorgesehene Aussparung, jedoch ist es bisher nicht gelungen, ein geeignetes Material für die Beschichtung der Dichtflächen zu finden, das einerseits die gewünschten elastischen Eigenschaften aufweist und mit dem die schäumbaren Kunststoffe, insbesondere Polyurethan, andererseits nicht nach wenigen Spritzgießzyklen eine nicht zu vernachlässigende klebende Verbindung im Randbereich der plattenartigen Schicht aufbauen. Letzteres führt dazu, daß beim Öffnen einer Form nach dem Spritzgießen der Laufsohle diese immer wieder sowohl an der Bodenfläche des Bodenstempels - jedenfalls beim Vorhandensein einer Gravur in der Bodenfläche - als auch am Rand des am Verdränger verankerten Läufers haften bleibt und beschädigt wird, was selbstverständlich die Wirtschaftlichkeit einer derartigen Schuhbesohlung erheblich beeinträchtigt.

Die vorliegende Erfindung hat sich daher die Aufgabe gestellt, ein Verfahren und eine Vorrichtung zur Durchführung dieses Ver- fahrens zur Verfügung zu stellen, mit denen mit vorgesehenen Aussparungen versehene Laufsohlen aus schäumbarem Kunststoffmaterial, beispielsweise Polyurethan, in Spritzgießformen hergestellt werden können, ohne daß einerseits Laufsohlenmaterial in die vorgesehenen Aussparungen gelangt und andererseits Laufsohlenmaterial eine derart intensive klebende Verbindung mit dem/den am Verdränger verankerten Läufer(n) eingeht, daß die Laufsohle beim Öffnen der Spritzgießform sowohl an der Bodenfläche des Bodenstempels - zumindest beim Vorhandensein einer Gravur in der Bodenfläche - als auch an dem/den Läufer(n) haften bleibt.

Die Erfindung erreicht dies mit den Merkmalen der kennzeichnenden Teile des Hauptanspruchs 1 und des Nebenanspruchs 6.

Als besonders vorteilhaft erweist sich dabei, daß jede Dichtfläche eines Läufers einen Dichtkörper aus elastomerem Material trägt, der von der Dichtfläche gehalten wird und der den eine gewünschte Aussparung definierenden Hohlraum zwischen Bodenfläche, jeweiligem Trennsteg und Dichtfläche jedenfalls derart ausfüllt, daß er formschlüssig an der Innenseite der jeden Trennsteg in Richtung auf den Läufer abschließenden Dichtkante anliegt. Auf diese Weise kann einerseits kein Laufsohlenmaterial in eine vorgesehene Aussparung eindringen und andererseits keine flächenmäßig bedeutsame klebende Verbindung zwischen Laufsohlenmaterial und elastomerem Material des Dichtkörpers entstehen, die beim Öffnen der Form ein Haftenbleiben der Laufsohle am Läufer verursacht.

Als weiterer Vorteil ergibt sich, daß jeder Dichtkörper unmittelbar in der mit ihm zu versehenden Spritzgießform hergestellt werden kann, indem der im Bodenstempel eingelassene Teil der Spritzgießform oder ein durch plastisches Material darin abgetrennter Bereich durch Eingießen in den Bodenstempel direkt oder durch eine spezielle als Angußkanal vorgesehene durchgehende Bohrung im jeweiligen Läufer so mit flüssigem oder verflüssigtem elastomerem Material angefüllt wird, daß sich nach dem unmittelbar danach erfolgenden Aufsetzen des Verdrängers auf den Bodenstempel - vorzugsweise außerhalb der Spritzgießmaschine - derart, daß die jeweilige Dichtfläche des betreffenden Läufers entweder unmittelbar oder nahezu auf dem zugehörigen Trennsteg aufsitzt, der gewünschte Dichtkörper - vorzugsweise einschließlich auf seiner der Dichtfläche des Läufers zugekehrten Seite erforderlicher Halteelemente austrennbar aus einem gegossenen Block elastomeren Materials ausbildet.

Weitere vorteilhafte Ausgestaltungen des Gegenstandes der Erfindung werden durch die Merkmale der Unteransprüche 2 bis 5 sowie 7 bis 13 charakterisiert.

Ein Ausführungsbeispiel des erfindungsgemäßen Gegenstandes ist in der Zeichnung dargestellt. Es zeigen:

Figur 1: Aufsicht auf den Bodenstempel einer erfindungsgemäßen Spritzgießform,

Figur 2: Formseitige Aufsicht auf den Verdränger einer erfindungsgemäßen Spritzgießform,

Figur 3: Schnitt A-A der Fig. 1 und 2 im geöffneten Zustand einer erfindungsgemäßen Spritzgießform

Figur 4: Schnitt B-B der Fig. 1 und 2 vor dem Einspritzen schäumbaren Kunststoffmaterials in eine erfindungsgemäße Spritzgießform

Figur 5: Schnitt B-B der Fig. 1 und 2 nach dem Einspritzen schäumbaren Kunststoffmaterials in eine erfindungsgemäße Spritzgießform.

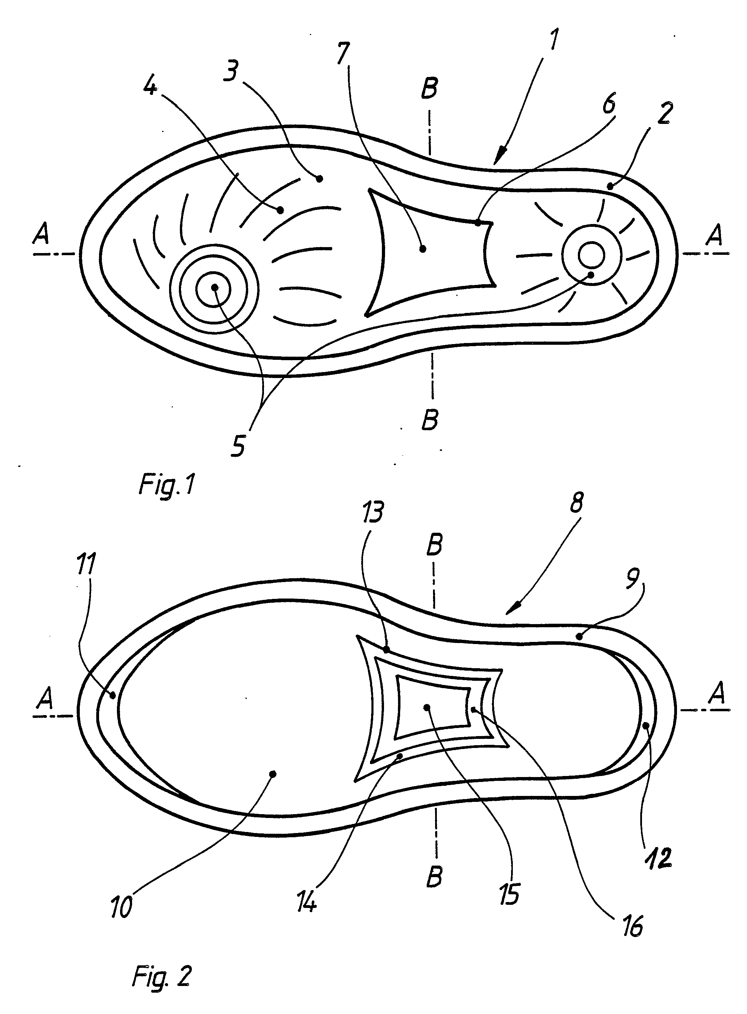

Figur 1 zeigt eine Aufsicht auf einen Bodenstempel 1 mit einer Trennfläche 2 gegenüber einem Verdränger oder Leisten und einem wannenförmigen Formbereich 3, der neben den nicht im einzelnen dargestellten Seitenwänden insbesondere eine die Lauffläche der Schuhsohle ausbildende Bodenfläche 4 aufweist, auf der einerseits eine aus dem Material des Bodenstempels 1 - normalerweise Metall, vorzugsweise Aluminium oder legiertes Aluminium - herausgearbeitete Gravur 5 und andererseits ein auf gleiche Weise erzeugter umlaufender Trennsteg 6 angeordnet ist. Dieser Trennsteg 6 definiert in der zu gießenden Laufsohle eine Aussparung 7. Sind mehrere derartige Aussparungen erforderlich, so sind entsprechend viele derartige Trennstege herauszuarbeiten.

Figur 2 zeigt das Gegenstück einer Spritzgießform zum Bodenstempel 1 der Figur 1, nämlich die formseitige Aufsicht auf einen Verdränger 8 mit einer Trennfläche 9 gegenüber dem Bodenstempel 1 und einem in Richtung des Betrachters aufgewölbten Formbereich 10, dessen Seitenwandbereiche 11, 12 im Gegensatz zu den übrigen Seitenwandbereichen deutlich abgeflacht sind, um hier ein Hochziehen der Laufsohle über die später zu erzeugende Zwischensohle bzw. das Obermaterial des Schuhs zu erreichen. Aus dem Formbereich 10 ragt ein im Verdränger 8 - hier senkrecht zur Zeichenebene - verschiebbarer kolbenartiger Läufer 13, dessen der Bodenfläche 4 des Bodenstempels 1 gegenüberstehende Dichtfläche 14 einen aus elastomerem Material gefertigten Dichtkörper 15 trägt, dessen Seitenwände 16 in Richtung auf den Betrachter und damit im Betrieb auf den Bodenstempel 1 verjüngt sind. Die Dichtfläche 14 des Läufers 13 überkragt bei Gegeneinanderstellung von Bodenstempel 1 und Verdränger 8 die durch den Trennsteg 6 definierte Aussparung 7 deutlich nach allen Seiten, der Dichtkörper 15 ist so gestaltet, daß er sich nach dem Aufsetzen der Dichtfläche 14 auf den Trennsteg 6 in jedem Fall formschlüssig an die Innenseite der den Trennsteg 6 in Richtung des Betrachters abschließenden Dichtkante anlegt. Bei Vorhandensein mehrerer Aussparungen 7 können entweder mehrere einzelne Läufer 13 oder ein einziger Läufer 13 mit mehreren entsprechend ausgeformten Dichtflächen 14 zur Anwendung kommen.

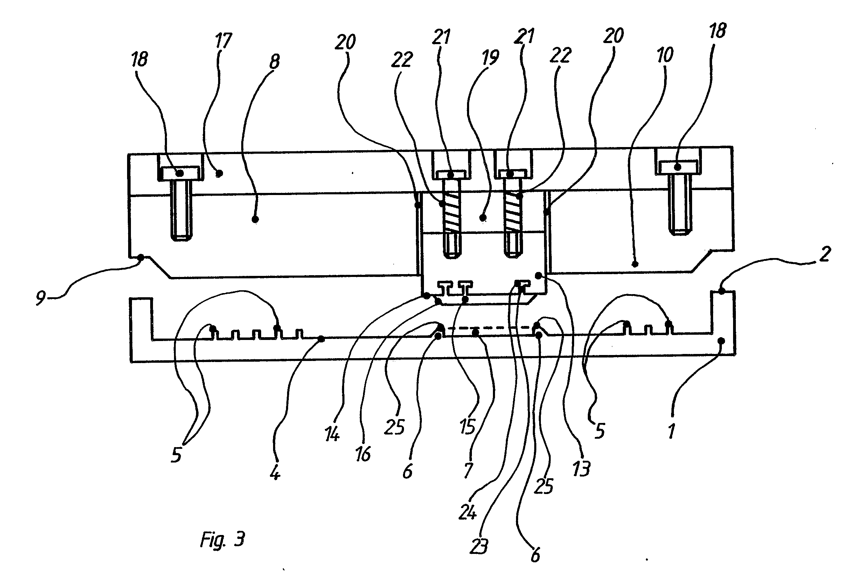

Figur 3 zeigt den Schnitt A-A sowohl durch die Figur 1 als auch durch die Figur 2 in einer zur geöffneten Stellung einer erfindungsgemäßen Spritzgießform kombinierten Darstellung, wobei - wie schon in den Figuren 1 und 2 - auf die Darstellung des nicht erfindungswesentlichen Formenrahmens verzichtet wird. Gezeigt wird zunächst eine fest mit der Spritzgießmaschine verbundene Montageplatte 17, deren Verbindung mit der Spritzgießmaschine hier allerdings nicht dargestellt ist. Diese Montageplatte 17 trägt mittels kraftschlüssiger Verbindungen, beispielsweise Schrauben 18 mit entsprechenden Bohrungen und Gewindebohrungen, den Verdränger 8 mit der Trennfläche 9 und dem Formenbereich 10. Parallel zur Schließrichtung der Spritzgießform durchsetzt den Verdränger 8 eine Öffnung 19, deren Querschnitt senkrecht zur Schließrichtung der Spritzgießform in der Form einer in der zu gießenden Laufsohle vorgesehenen Aussparung 7 entspricht, diese jedoch nach allen Seiten deutlich überkragt. Diese Öffnung 19 ist zunächst - was in der Figur 2 nicht dargestellt wurde - mit einer Gleitschicht 20 aus geeignetem nichtschrumpfendem Kunststoffmaterial, beispielsweise Uralith, ausgekleidet und führt darüber hinaus einen kolbenartigen Läufer 13, der mittels in der Montageplatte 17 geführter Schrauben 21 und zwischen Montageplatte 17 und Läufer 13 über die Schrauben 21 gezogener Druckfedern 22 in der Ruhelage jeweils seinen größten Abstand von der Montageplatte 17 aufweist, sich jedoch bei Druckbelastung in den Verdränger 8 hineinbewegen kann. Der Läufer 13 hält auf seiner dem Bodenstempel 1 gegenüberstehenden Dichtfläche 14 einen Dichtkörper 15 aus elastomerem Material mit in Richtung auf den Bodenstempel 1 verjüngten Seitenflächen 16. Die Halterung erfolgt in diesem Fall mittels in den Dichtkörper 15 auf seiner dem Läufer 13 zugewandten Seite integrierter Zapfen 23 mit erweitertem freien Ende und entsprechender Vertiefungen 24 mit einer Hinterschneidung am jeweiligen Bohrlochtiefsten. Die Zapfen 23 und Vertiefungen 24 im Läufer 13 sind auf der Dichtfläche 14 derart unsymmetrisch angeordnet, daß sie bei einem eventuell erforderlich werdenden Ablösen und Wiederanbringen des Dichtkörpers 15 auf dem Läufer 13 selbstjustierend wirken. Ein solches Druckknopfsystem kann selbstverständlich auch jede andere mögliche Form von paßförmigen Zapfen und Vertiefungen aufweisen oder auch durch jedes andere geeignete Haltesystem bekannter Art ersetzt werden.

Dem Verdränger 8 steht der Bodenstempel 1 gegenüber, der neben der Trennfläche 2 insbesondere die Bodenfläche 4 mit der Gravur 5 und dem umlaufenden Trennsteg 6 aufweist, wobei letzterer in Richtung des Verdrängers 8 mit der Dichtkante 25 abgeschlossen wird. Im fabrikmäßigen Betrieb wird zunächst der Bodenstempel 1 mittels geeigneter Mittel - die hier nicht dargestellt sind - soweit in Richtung des Verdrängers 8 gefahren, daß die Dichtfläche 14 des Läufers 13 gerade auf der Dichtkante 25 des Trennsteges 6 aufsitzt und sich der Läufer 13 gegenüber der Montageplatte 17 gerade aus der Ruhestellung begibt. Die Trennflächen 2 und 9 sind entsprechend weit voneinander entfernt. In diesem Zustand wird das schäumbare Kunststoffmaterial nahezu drucklos in die Form gegeben, in der unmittelbar anschließend das Aufschäumen des Kunststoffes beginnt. Noch während des Aufschäumens wird der Bodenstempel 1 weiter gegen den Verdränger 8 gefahren bis zwischen den Trennflächen 2 und 9 nur ein schmaler Schlitz zum Entweichen überschüssigen Kunststoffmaterials verbleibt. Die Dichtfläche 14 des Läufers 13 liegt immer noch auf der Dichtkante 25 des Trennsteges 6 auf, der Läufer 13 selbst ist jedoch in den Verdränger hineingefahren. In diesem Zustand verbleibt die Spritzgießform bis zum Erstarren des Kunststoffmaterials, um dann durch ausreichendes Absenken des Bodenstempels 1, wobei die entstandene Laufsohle im Bodenstempel 1 verbleibt, die Form so weit zu öffnen, daß der Verdränger 8 durch einen mit dem Oberteil eines Schuhs versehenen Leisten für den nächsten Arbeitsschritt des Spritzgießens einer Zwischensohle ausgetauscht werden kann.

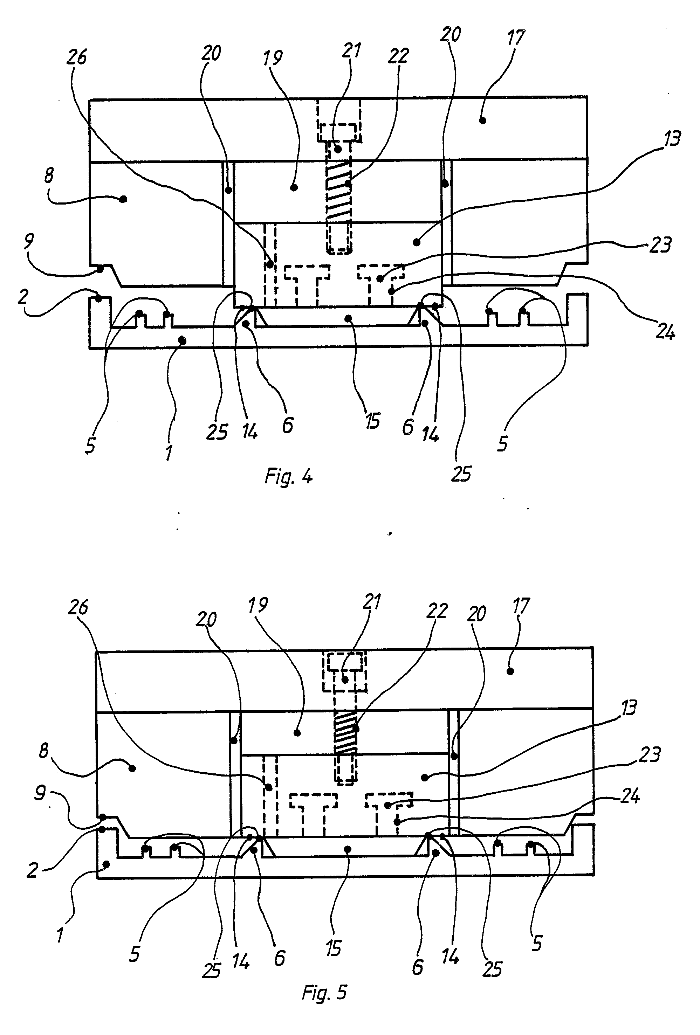

Figur 4 zeigt den Schnitt B-B der Figuren 1 und 2 in einer zum Betriebszustand einer Spritzgießform unmittelbar vor dem Einlaß des schäumbaren Kunststoffmaterials kombinierten Darstellung. Figur 5 zeigt eine der Figur 4 entsprechende Darstellung einer Spritzgießform im Stadium der Erstarrung des geschäumten Kunststoffmaterials zu einer Laufsohle einer Mehrschichten-Schuhsohle.

In beiden Darstellungen ist wiederum an einer mit der hier nicht dargestellten Spritzgießmaschine fest verbundenen Montageplatte 17 ein Verdränger 8 kraftschlüssig gehalten, der in der Schließrichtung der Spritzgießform eine durchgehende Öffnung 19 aufweist, die mit einer Gleitschicht 20 aus nichtschrumpfendem Kunststoff ausgefüttert ist und innerhalb dieser Gleitschicht 20 einen kolbenartigen Läufer 13 führt. Dieser Läufer 13 ist mittels Schrauben 21 und Druckfedern 22 an der Montageplatte 17 verankert und trägt auf seiner dem Bodenstempel 1 zugewandten Dichtfläche 14 einen Dichtkörper 15 aus elastomerem Material. Der Bodenstempel 1 mit der Gravur 5 und einem umlaufenden Trennsteg 6 ist im Falle der Figur 4 so weit an den Verdränger 8 herangefahren, daß die den umlaufenden Trennsteg 6 in Richtung auf den Verdränger 8 abschließende Dichtkante 25 die diese Dichtkante 25 nach außen allseitig merklich überkragende Dichtfläche 14 des Läufers 13 gerade berührt, so daß der Läufer 13 seine Ruhelage gegenüber der Montageplatte 17 im wesentlichen beibehält, und der Dichtkörper 15 den die gewünschte Aussparung in der zu gießenden Laufsohle definierenden, zwischen Bodenstempel 1, umlaufendem Trennsteg 6 und Dichtfläche 14 erzeugten Hohlraum jedenfalls so ausfüllt, daß der Dichtkörper 15 in jedem Fall formschlüssig an der Innenseite der Dichtkante 25 anliegt. Die Trennflächen 2 bzw. 9 von Bodenstempel 1 bzw. Verdränger 8 sind so weit voneinander entfernt, daß durch einen nicht dargestellten Angußkanal im ebenfalls nicht dargestellten Formenrahmen das flüssige schäumbare

Kunststoffmaterial nahezu drucklos in die Spritzgießform aus Bodenstempel 1 und Verdränger 8 eingebracht werden kann. Der rechts und links des umlaufenden Trennsteges 6 vorhandene Raum ist im dargestellten Zustand jedoch noch leer.

Im in Figur 5 dargestellten Fall ist dagegen sowohl die Einfüllung des schäumbaren Kunststoffmaterials als auch das endgültige Zusammenfahren der Spritzgießform durch Verfahren des Bodenstempels 1 gegen den Verdränger 8 bereits erfolgt. Der Läufer 13 ist entsprechend weit gegen die Druckkraft der Druckfedern 22 in den Verdränger 8 zurückgeschoben, wobei weiterhin das Eindringen von Kunststoffmaterial in den zwischen Bodenstempel 1, umlaufendem Trennsteg 6 und Dichtfläche 14 aufgespannten und im wesentlichen mit dem Dichtkörper 15 ausgefüllten Hohlraum verhindert wird, und die Trennflächen 2 bzw. 9 von Bodenstempel 1 bzw. Verdränger 8 lassen nur noch einen schmalen Schlitz zum Abfließen überschüssigen Kunststoffmaterials offen. Der rechts und links des Trennsteges 6 verbleibende Raum ist mit der erstarrenden Laufsohle gefüllt. Damit ist die Herstellung einer Laufsohle mit einer Aussparung weitgehend durchgeführt.

In den Figuren 4 und 5 ist im Gegensatz zu den Figuren 2 und 3 im übrigen ein Läufer 13 gezeigt, der jeweils einen Angußkanal 26 in Form einer durch ihn hindurchgehenden Bohrung für die Herstellung des Dichtkörpers 15 vor Beginn des fabrikmäßigen Spritzgießbetriebes bzw. im Falle von Reparaturen umfaßt.

Das vorstehend beschriebene Ausführungsbeispiel stellt - wie bereits an verschiedenen vorangegangenen Stellen der Beschreibung des erfindungsgemäßen Gegenstandes angemerkt wurde keine Beschränkung der möglichen Anwendungsfälle des erfindungsgemäßen Gegenstandes dar. Es sei hier jedoch insbesondere darauf hingewiesen, daß die bisherige Darstellung der Bodenfläche 4 und/oder der Dichtungsfläche 14 bzw. der durch die Dichtkante 25 aufgespannten Fläche im dreidimensionalen Raum als Ebene nur aus Gründen der einfachen Darstellung erfolgte. Selbst verständlich umfaßt der erfindungsgemäße Gegenstand auch Spritzgießformen, die die herzustellenden Laufsohlen den natürlichen Krümmungen eines menschlichen Fußes anpassen, so daß die Bodenfläche 4 und/oder die Dichtungsfläche 14 bzw. die durch die Dichtkante 25 im dreidimensionalen Raum erzeugte Fläche dann entsprechend gekrümmte Flächen im Raum darstellen,denen der Dichtkörper 15 entsprechend angepaßt wird.

**Ansprüche**

1. Verfahren zum Abdichten des Restspaltes zwischen Bodenstempel und Läufer(n) einer Spritzgießform für Mehrschichten-Schuhsohlen aus geschäumten Kunststoffen, beispielsweise geschäumten Polyurethanen, mit unterschiedlichen chemischen und/oder physikalischen Eigenschaften jeder Schicht, wobei mindestens die als Laufsohle vorgesehene Schicht mindestens eine mit dem Material mindestens einer weiteren Schicht aufzufüllende Aussparung aufweist, dadurch gekennzeichnet, daß jeder Läufer (13) auf seiner der die Lauffläche der Schuhsohle ausbildenden Bodenfläche ( 4) des Bodenstempels ( 1) gegenüberstehenden Dichtfläche (14) mindestens einen im wesentlichen plattenförmigen Dichtkörper (15) aus elastomerem Material trägt, der mittels geeigneter Halteelemente (23,24) an dieser Dichtfläche (14) gehalten wird und beim Aufsitzen des jeweiligen Läufers (14) auf dem/den die jeweilige(n) Aussparung(en) ( 7) in der Laufsohle definierenden, auf der Bodenfläche ( 4) umlaufenden Trennsteg(en) ( 6) den zwischen Bodenfläche(4), jeweiligem Trennsteg ( 6) und Dichtfläche (14) aufgespannten Hohlraum jedenfalls so ausfüllt, daß der Dichtkörper (15) formschlüssig an der Innenseite der jeden Trennsteg ( 6) in Richtung auf den Läufer (13) abschließenden Dichtkante (25) anliegt.

2. Verfahren zum Abdichten des Restspaltes zwischen Bodenstempel und Läufer(n) einer Spritzgießform für Mehrschichten-Schuhsohlen nach Anspruch 1,
dadurch gekennzeichnet,
daß jeder Dichtkörper (15) aus nichtschrumpfendem elastomerem Material in der Spritzgießform bei - jedenfalls in der Erstarrungsphase - auf den jeweiligen Trennsteg ( 6) bzw. dessen Dichtkante (25) aufgesetzter Dichtfläche (14) des jeweiligen Läufers (13) gegossen ist.

3. Verfahren zum Abdichten des Restspaltes zwischen Bodenstempel und Läufer(n) einer Spritzgießform für Mehrschichten-Schuhsohlen nach Anspruch 1,
dadurch gekennzeichnet,
daß jeder Dichtkörper (15) aus geschäumtem Kunststoffmaterial, beispielsweise Polyurethan, in der Spritzgießform bei - jedenfalls in der Erstarrungsphase - nahezu auf den jeweiligen Trennsteg ( 6) bzw. dessen Dichtkante (25) aufgesetzter Dichtfläche (14) des jeweiligen Läufers (13) gegossen ist.

4. Verfahren zum Abdichten des Restspaltes zwischen Bodenstempel und Läufer(n) einer Spritzgießform für Mehrschichten-Schuhsohlen nach einem der Ansprüche 1 bis 3, dadurch gekennzeichnet,

daß die Seitenwände (16) jedes Dichtkörpers (15) in Richtung auf die Bodenfläche ( 4) des Bodenstempels ( 1) verjüngt sind.

5. Verfahren zum Abdichten des Restspaltes zwischen Bodenstempel und Läufer(n) einer Spritzgießform für Mehrschichten-Schuhsohlen nach einem der Ansprüche 1 bis 4, dadurch gekennzeichnet,
daß jeder Dichtkörper (15) auf seiner dem zugehörigen Läufer (13) zugewandten Seite integrierte - mitgegossene Halteelemente (23) aufweist, die mit komplementären Halteelementen (24) an bzw. in diesem Läufer (13) zusammenwirken.

6. Vorrichtung zum Abdichten des Restspaltes zwischen Bodenstempel und Läufer(n) einer Spritzgießform für Mehrschichten-Schuhsohlen, die aus einem zweiteiligen Formenrahmen besteht, der seinerseits einen Bodenstempel mit mindestens einem umlaufenden Trennsteg auf seiner Bodenfläche und - jedenfalls in einem ersten Schritt - einen Verdränger mit mindestens einem dem vorgenannten Trennsteg gegenüberliegenden Läufer einschließt, wobei Bodenstempel und Verdränger innerhalb des Formenrahmens gegeneinander hin- und herbewegbar sind und jeder Läufer innerhalb des Verdrängers parallel zur Verschiebungsrichtung zwischen Bodenstempel und Verdränger ebenfalls verschiebbar angeordnet ist,
dadurch gekennzeichnet,
daß jeder Läufer (13) auf seiner der die Lauffläche der Schuhsohle ausbildenden Bodenfläche ( 4) des Bodenstempels ( 1) gegenüberstehenden Dichtfläche (14) mindestens einen im wesentlichen plattenförmigen Dichtkörper (15) aus elastomerem Material trägt, der mittels geeigneter Halteelemente (23,24) an dieser Dichtfläche (14) gehalten wird und beim Aufsitzen des jeweiligen Läufers (13) auf dem/den die jeweilige(n) Aussparung(en) (7) in der Laufsohle definierenden, auf der Bodenfläche (4 ) umlaufenden Trennsteg(en) (6 ) den zwischen Bodenfläche (4 ), jeweiligem Trennsteg (6 ) und Dichtfläche (14) aufgespannten Hohlraum jedenfalls so ausfüllt, daß der Dichtkörper (15) formschlüssig an der Innenseite der jeden Trennsteg (6 ) in Richtung auf den Läufer (13) abschließenden Dichtkante (25) anliegt.

7. Vorrichtung zum Abdichten des Restspaltes zwischen Bodenstempel und Läufer(n) einer Spritzgießform für Mehrschichten-Schuhsohlen nach Anspruch 6,
dadurch gekennzeichnet,
daß jeder Dichtkörper (15) aus nichtschrumpfendem elastomerem Material gegossen ist und beim Aufsitzen des entsprechenden Läufers(13) auf dem zugehörigen Trennsteg (6 ) die Bodenfläche (4) des Bodenstempels ( 1) ohne Stauchung berührt.

8. Vorrichtung zum Abdichten des Restspaltes zwischen Bodenstempel und Läufer(n) einer Spritzgießform für Mehrschichten-Schuhsohlen nach Anspruch 6,
dadurch gekennzeichnet,
daß jeder Dichtkörper (15) aus geschäumtem Kunststoffmaterial, beispielsweise Polyurethan, gegossen ist und beim Aufsetzen des entsprechenden Läufers (13) auf den zugehörigen Trennsteg (6) gestaucht wird.

9. Vorrichtung zum Abdichten des Restspaltes zwischen Bodenstempel und Läufer(n) einer Spritzgießform für Mehrschichten-Schuhsohlen nach einem der Ansprüche 6 bis 8,
dadurch gekennzeichnet,
daß die Seitenwände (16) jedes Dichtkörpers (13) in Richtung auf die Bodenfläche (4 ) des Bodenstempels (1 ) verjüngt sind.

10. Vorrichtung zum Abdichten des Restspaltes zwischen Bodenstempel und Läufer(n) einer Spritzgießform für Mehrschichten-Schuhsohlen nach einem der Ansprüche 6 bis 9,
dadurch gekennzeichnet,
daß jeder Dichtkörper (15) auf seiner dem zugehörigen Läufer (13) zugewandten Seite intregrierte Halteelemente (23) aufweist, die mit komplementären Halteelementen (24) in diesem Läufer (13) zusammenwirken.

11. Vorrichtung zum Abdichten des Restspaltes zwischen.Bodenstempel und Läufer(n) einer Spritzgießform für Mehrschichten-Schuhsohlen nach Anspruch 10,
dadurch gekennzeichnet,
daß jeder Dichtkörper (15) auf seiner dem zugehörigen Läufer (13) zugekehrten Seite mindestens drei unsymmetrisch und damit selbstjustierend angeordnete,vorzugsweise ursprünglich mitgegossene, Zapfen (23) als Halteelemente trägt, die über ihre Länge unterschiedliche ,in Richtung ihres freien Endes nicht nur abnehmende Durchmesser aufweisen können.

12. Vorrichtung zum Abdichten des Restspaltes zwischen Bodenstempel und Läufer(n) einer Spritzgießform für Mehrschichten-Schuhsohlen nach einem der Ansprüche 6 bis 11,
dadurch gekennzeichnet,
daß jeder Läufer (13) in seiner Dichtfläche (14) für jeden Dichtkörper (15) mindestens drei zu den Zapfen (23) jedes Dichtkörpers (15) paßgerechte, unsymmetrisch und damit selbstjustierend angeordnete Vertiefungen (24) als Halteelemente aufweist, die über ihre Länge in Richtung auf das Innere des Läufers (13) unterschiedliche, nicht nur abnehmende Durchmesser aufweisen können.

13. Vorrichtung zum Abdichten des Restspaltes zwischen Bodenstempel und Läufer(n) einer Spritzgießform für Mehrschichten-Schuhsohlen nach einem der Ansprüche 6 bis 12,

dadurch gekennzeichnet,
daß jeder Läufer (13) mindestens eine durchgehende Bohrung als Angußkanal (26) zur Herstellung der erforderlichen Dichtkörper (15) aufweist.

Fig. 1

Fig. 2

Fig. 3

Fig. 4

Fig. 5